# EUROPEAN PATENT APPLICATION

(11) **EP 2 006 537 A2**
(43) Date of publication of application: **24.12.2008**
(21) Application number: 08158677.8
(22) Date of filing: 20.06.2008
(51) Int. Cl.: F03D 1/06, F03D 3/06, F03D 11/00

(54) **Blade for a horizontal-axis wind generator**

(30) Priority: 21.06.2007 ES 200701720
(71) Applicant: Torres Martinez, Manuel, E-31007 Pamplona, Navarra (ES)
(72) Inventor: Torres Martinez, Manuel, E-31007 Pamplona, Navarra (ES)
(74) Representative: Intes, Didier Gérard André

(57) **Abstract**

The invention relates to a blade for a horizontal-axis wind generator consisting of two flattened bodies (1, 2) which are arranged opposite one another in longitudinal convergence towards the tip without making contact with one another, said bodies being attached by means of an intermediate latticework formed by ties (3) with an aerodynamic profile, which ties (3) are joined to the flattened bodies (1, 2) by means of hinged attachments providing flexibility to the structural assembly for preventing fatigue fractures.

## Description

### Field of the Art

The present invention relates to wind generators which are used for electricity production by means of using wind energy, particularly those of the horizontal-axis type having a blade rotor which is arranged facing the wind to receive a rotating drive, proposing a blade with a particular structural embodiment for said wind generators.

### State of the Art

Horizontal-axis wind generator blades usually have an aerodynamic configuration in a monoplane embodiment, such that as the size of said blades increases, drawbacks arise in the following aspects:
- The maximum length is limited by the transport, which implies having to renounce a percentage of the output in order to facilitate moving them to parks for installing the wind generators.
- The blades structurally need to be very thick, and as a consequence of the length limitations, the aerodynamic profiles which are used have a high relative thickness, which makes their aerodynamic efficiency decrease, thereby reducing energy efficiency.
- There is considerable bending at the tip and this can cause the blade to hit the wind generator tower, which forces using shapes affecting the output and complicating the manufacture.
- The manufacture of each blade is expensive since a large amount of material must be incorporated.
- Long lengths create buckling problems for the structural skins of the blades, making it necessary to increase the thickness of the cores of the blades in order to stabilize them.
- The diameter of the bearing for coupling blades on the hub increases, its cost being raised and there being few manufacturers of the necessary bearings.
- Access to wind generator installation parks needs expensive tracks due to the means of transport which must be used.

Several solutions of constructive implementations of the blades have been developed in order to cancel out these drawbacks, for example:
French patent document FR 2609506 describes a constructive solution of blades formed according to a ring-shaped configuration.
Patent documents WO 03/036082, US 6,902,370 and US 6,972,498 describe constructive solutions of blades formed telescopically.
European patent document EP 0 064 742 describes a constructive solution of two twin blades arranged in a common support for coupling to a rotating rotor, each of the blades having an independent rotational movement for its orientation.
Patent documents US 1,780,431, US 4,081,221 and WO 2006/128940 describe constructive solutions of two or more blades fixedly associated on a common support for coupling to the rotating rotor to be actuated.
Patent document US 1,820,529 describes a constructive solution of blades formed by two bodies diverging from the tip of the blade to the base thereof, said bodies being attached at the separation part by means of intermediate ties.

All these solutions have the purpose of providing a blade surface which allows fulfilling the necessary efficiency of collecting the action of the wind, with length dimensions making it possible to overcome the previously mentioned drawbacks as best as possible. However such solutions do not provide characteristics properly ensuring the structural strength of the blades for the working function for which they are intended, having to resort to constructive forms with expensive materials and very heavy elements reducing the efficiency of the blades.

### Object of the Invention

According to the invention a blade intended for horizontal-axis wind generators is proposed, which blade has been developed according to a structural configuration effectively solving the problems derived from an oversized length, providing characteristics that improve the performance of the blade in its application function without negatively affecting the transport, since the maximum length of the structural assembly of the blade is within normal transport ranges.

This blade object of the invention is made up of two essentially equal, independent flattened bodies which extend opposite one another, converging from the blade root to the tip without making contact with one another, with an attachment between said bodies by means of a lattice structure formed with ties having an aerodynamic profile and an attachment of such ties to the flattened bodies by means of hinged couplings.

A blade structure is thus obtained in which the hinged attachments between the ties of the central latticework and the flattened bodies provide a flexibility preventing rigid stress points prone to fatigue fractures as a consequence of the stress that the blade is subjected to in the work of its application function.

Said blade structure thus has the necessary rigidity and strength, but has a shock load-damping quality, provided by the attachment between the ties of the central latticework and the flattened bodies, so that the loads transmitted to the hub on which the blade is coupled and the occasional loads in the areas of the structural attachments of the blade itself decrease.

The relative geometric arrangement between the two flattened bodies of the blade further allows placing the elastic axis in the desired position, such that with sudden changes in the direction or intensity of the wind, the system reacts by twisting itself and lowering the angle of attack even before the pitch control system reacts. The response time is thus reduced, which thus achieves decreasing the value of the mechanical load peaks in the wind generator, the generated power peaks and rotational overspeeds.

In addition, the use of a biplane blade system attached by latticework considerably increases rigidity with respect to a biplane blade attached only at the root and at the tip, which increases the natural frequency value of the vibration modes of the blade, and the pitch control system of the wind generator can therefore be faster.

This allows increasing the band width of the pitch control system, raising the relative influence of the modification of the pitch angle (β) control on the rotor speed (Ω), such that this allows controlling larger blades in which the increase of the radius of the blade raises the relative influence of the modification of the wind speed (V) on rotor speed (Ω), i.e., the partial derivatives ratio ∂Ω/∂V, more proportionally than the partial derivatives ratio ∂Ω/∂β*.*

The aerodynamic profile of the ties of the latticework attaching the flattened bodies to one another in turn allows optimizing output, since said ties have minimum aerodynamic drag, slowing the blade down very little in the rotational direction insofar as the oblique ties can be oriented such that the resultant of the aerodynamic forces collaborates in extracting energy from the wind, minimizing the loads on the blade.

In addition, from the structural point of view, the strong areas can be further separated and provide greater inertia to each section without jeopardizing the aerodynamics, since the aerodynamic function is separate from the structural function, profiles having little relative thickness and high efficiency being able to be used, with which profiles great structural rigidity is achieved in this case.

Furthermore the manufacture of the component elements of the blade is simplified and the amount of material necessary is reduced, less severe buckling conditioners, as well as lower weight being achieved, which allows decreasing the diameter of the coupling for fastening the blade in its assembly.

The transport is equally simplified upon decreasing the maximum length of the blade, even being able to separately transport the component elements and assemble them in the installation site of the wind generators applied.

The decrease of blade tip losses , and accordingly an extra output increase, can also be achieved as a secondary effect by means of aerodynamically placing a transverse strut at the end of the blade, thereby essentially preventing the circulation of air between the lower side and upper side of each of the component flattened bodies, such that the drop of the induction factor is emphasized in that area, whereby the outer area of the blade operates better and the global output increases.

The effect of reducing the generation of marginal vortexes also decreases the noise caused by the blade, which allows reaching higher rotational speeds since the main limitation to rotational speed is currently the noise caused by the blades. The increase of the rotational speed further involves a savings in the costs of the generator and other mechanical elements, as well as an increase in the output by being able to operate at the optimal ratio between the rotational speed and the wind speed during a longer operating range.

From an aerodynamics point of view, the configuration of the proposed blade has a series of particularities which can be used such that on one hand the component flattened bodies of the blade are shorter than the conventional blades with a single body, the length of this new blade structure depending on the gap between the flattened bodies and the aerodynamic interference factor between them.

On the other hand, the gap between the two flattened bodies and the stepping between them influences the lift coefficients of each body and the strength of the assembly, such that the two flattened bodies can be sufficiently separated so as to perform like independent profiles or the interference between them can be positively used bringing them closer to one another. The pressure fields equally vary, resulting in being able to obtain benefits such as delaying the stall or obtaining an increase in the lift coefficients.

There is an additional degree of freedom which can also be used, consisting of the possibility of arranging each of the flattened bodies at different angles of attack, whereby the performance of the blade can be optimized. The position of the pressure center can further be varied with the influence that this represents in the necessary torque in the pitch axis.

Said configuration of the proposed blade in turn allows using flattened bodies having little relative thickness to the blade root with good aerodynamic efficiency, thus overcoming the main reasons which conventional long blades have for not reaching a higher output, due to tip stalls and the use of profiles different from those which would be necessary, the latter due to the fact that in approaching the blade root a certain height of the central case of the blade is necessary for supporting large bending loads occurring, which forces increasing the relative thickness, and consequently an efficiency loss occurs, since below approximately 20% of the span, the necessary length greatly complicates logistics, so the law of optimal length is no longer followed and cylindrical geometry is used for attaching the blade to the assembly hub in the wind generator, which makes it necessary to use profiles having a high relative thickness (greater than 30% having worse aerodynamic properties.

Said blade object of the invention therefore has certainly advantageous features, acquiring its own identity and preferable character with respect to conventional blades which are being used in wind generators for the same function.

### Description of the Drawings

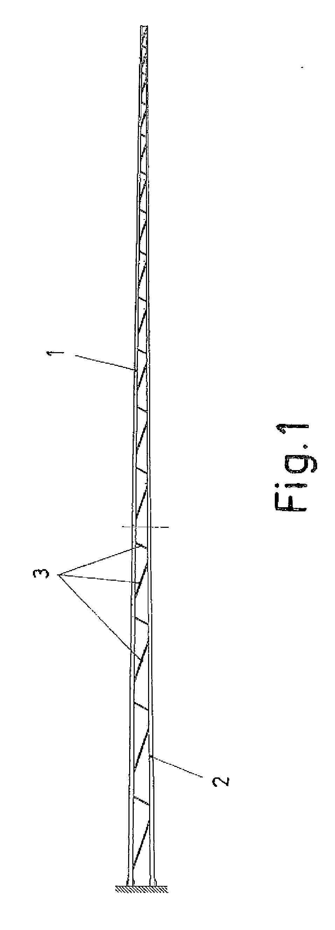

Figure 1 shows a side view of a wind generator blade structured according to the invention.

Figure 2 shows a perspective view of an embodiment of a flattened body for forming the proposed blade.

Figure 3 is an exploded perspective view of a detail of the hinged attachment of ties of the central latticework to one of the flattened bodies in the proposed blade.

Figure 4 is a sectioned frontal view of the assembly of the previous figure assembled.

Figure 5 is a perspective view of the end section of a blade according to the invention with the ends of the flattened bodies attached by means of an aerodynamic transverse strut.

Figure 6 is a perspective view of a wind generator with blades structured according to the invention.

Figure 7 is an enlarged side view of the upper part of the wind generator of the previous figure.

Figure 8 is an enlarged perspective of the upper part of the previous wind generator without the casing of the body for housing the generator.

### Detailed Description of the Invention

The object of the invention relates to a blade for horizontal-axis wind generators with a constructive embodiment which improves the functional performance and strength of the blade and allows achieving a high output with a relatively small longitudinal dimension.

The proposed blade is formed with two essentially equal, aerodynamically flattened bodies (1) and (2) which are arranged face to face, longitudinally converging from the blade root to the tip without making contact with one another at the end.

In forming the blade said flattened bodies (1) and (2) are attached to one another by means of an intermediate latticework formed by ties (3), whereby achieving a strong structural assembly, the flattened bodies (1) and (2) of which add a wind collection function allowing a high drive performance by the wind with a relatively small length, such that the blade can be constructed with suitable lengths for normal transport means.

According to a particular feature, the ties (3) of the intermediate latticework of the blade are formed with profiles that are also aerodynamic, such that said ties cause minimum drag slowing down the blade in the direction of its movement, which accordingly allows optimizing the output of said blade movement in the function applied in wind generators.

The oblique ties (3) of the mentioned structural intermediate latticework of the blade can be further oriented such that the resultant of the aerodynamic forces thereof collaborates in extracting energy from the wind, thus reducing the loads which the blade must support in the function of its application.

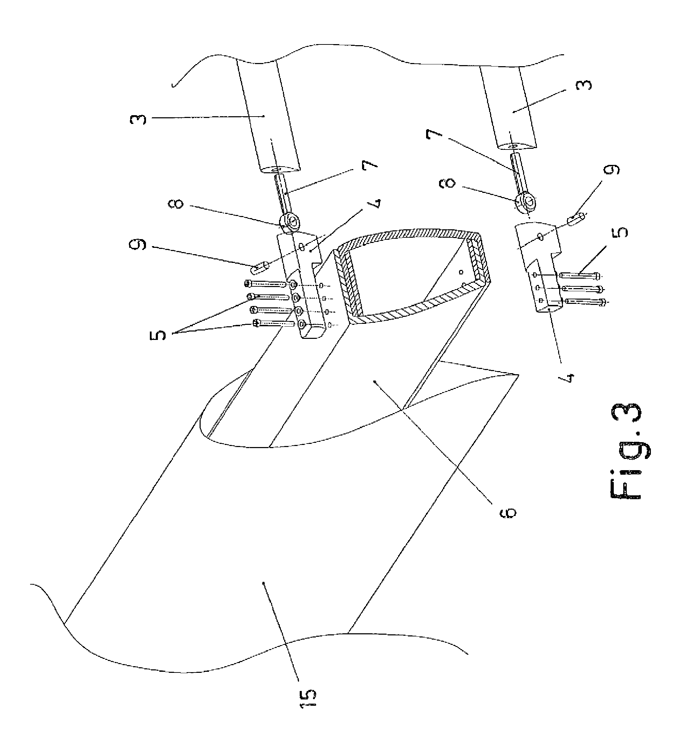

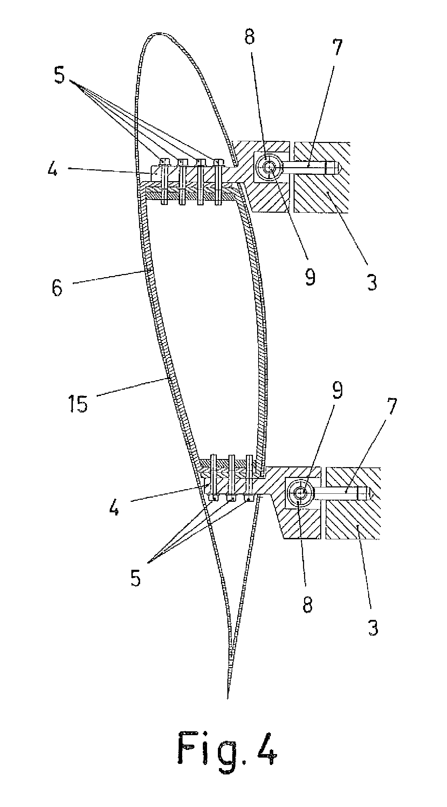

In addition, said ties (3) of the structural intermediate latticework of the blade are attached to the flattened bodies (1) and (2) by means of hinged attachments, as shown in Figures 3 and 4, whereby these attachment points offer a flexibility that prevents stresses which can cause fatigue fractures, such that the constructive blade structure is certainly strong for supporting the stresses and loads which the blade must support in the work function of its application.

According to one embodiment, the mentioned hinged attachments between the ties (3) of the intermediate latticework and the flattened bodies (1) and (2) of the blade are formed with a support (4) which is fixed by means of screws (5) on the central structural case (6) of the corresponding body (1) or (2), and a screw (7) coupled to the respective tie (3), said screw (7) being attached in a pivoting manner by means of a ring-shaped head (8) it has at its end, on the support (4) of the attachment by means of a pin (9) acting as a hinge pin.

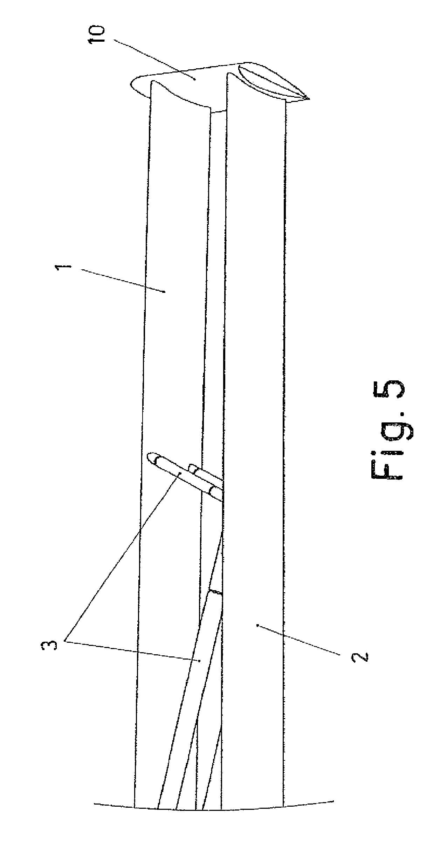

The flattened bodies (1) and (2) are attached to one another at the end of the blade by means of a transverse strut (10), as shown in Figure 5, said strut (10) also having an aerodynamic section, whereby essentially preventing the circulation of air between the lower side and upper side of the flattened bodies (1) and (2) in that area, the drop of the induction factor being emphasized, and accordingly a decrease in blade tip stalls is achieved, thus achieving an extra output increase.

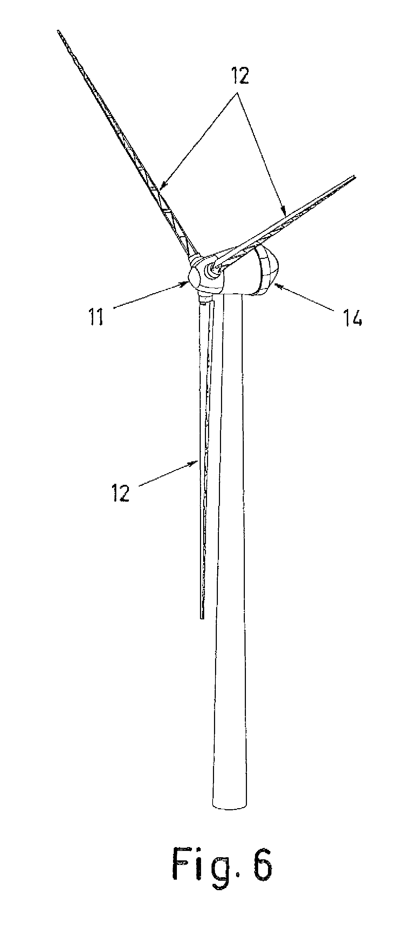

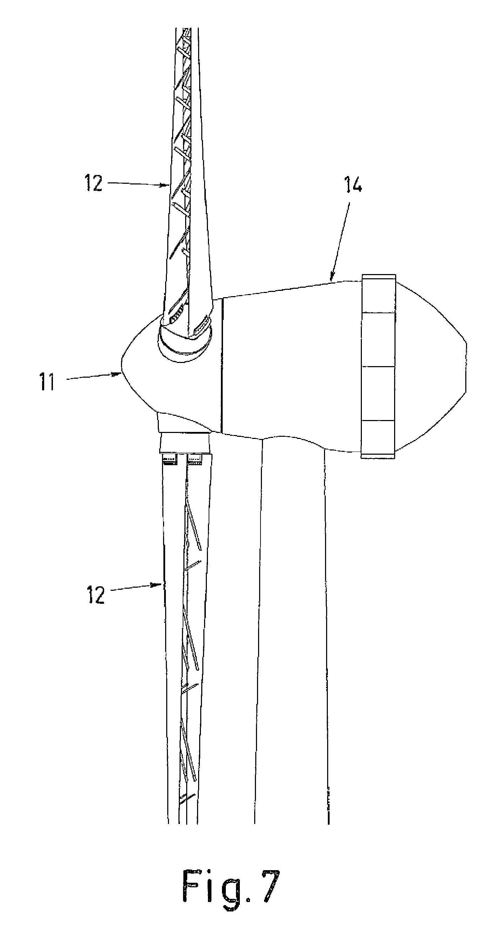

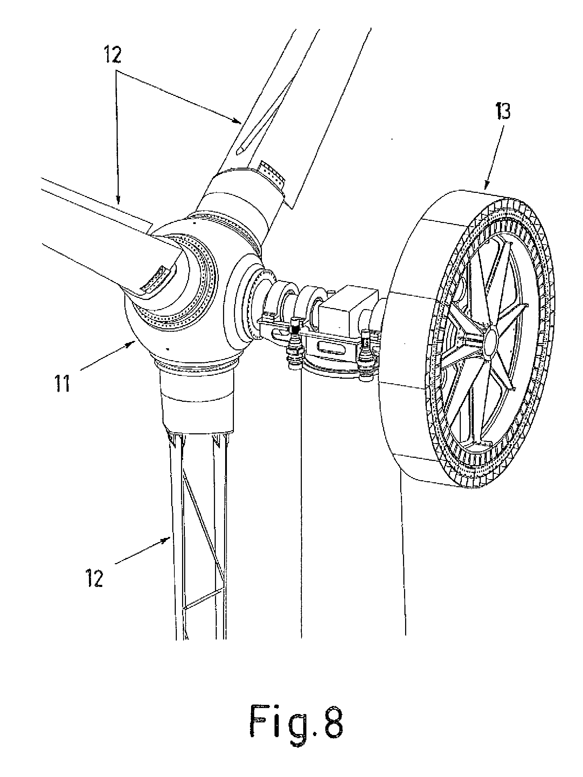

The proposed blade can be applied in horizontal-axis wind generators having a rotor (11) with blades (12) for being driven by the wind, for the purpose of providing the rotating operation of the electric power production generator (13) which is housed in the body (14) of the wind generator, according to Figures 6 to 8.

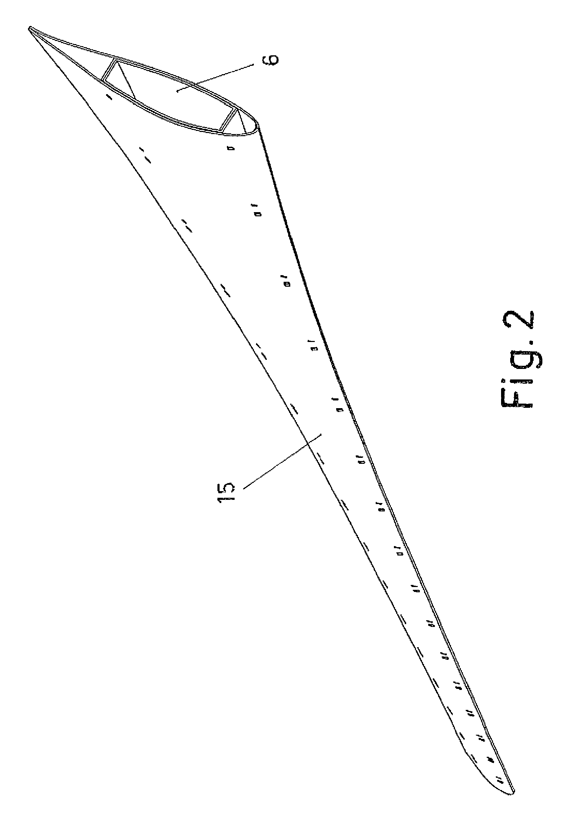

The structural formation of the flattened bodies (1) and (2) forming the blade according to the invention can have any constructive solution, Figures 2, 3 and 4 showing a nonlimiting embodiment of said flattened bodies (1) and (2) comprising a central case (6) formed by two U-shaped halves fitted together with an outer coating (15) determining the aerodynamic structural configuration.

## Claims

1. A blade for a horizontal-axis wind generator of the type formed by a biplane assembly, **characterized in that** it consists of two essentially equal aerodynamic flattened bodies (1 and 2) which are arranged opposite one another, which bodies longitudinally extend in convergence from the blade root to the tip without making contact with one another, with an intermediate latticework for the attachment between said bodies (1 and 2) formed by ties (3) also having an aerodynamic profile, the attachments of said ties (3) of the intermediate latticework to the flattened bodies (1 and 2) being formed by means of hinged attachments providing flexibility.

2. The blade for a horizontal-axis wind generator according to claim 1, **characterized in that** the oblique ties (3) of the intermediate latticework are oriented such that the resultant of the aerodynamic forces thereof collaborates in extracting energy from the wind acting on the blade.

3. The blade for a horizontal-axis wind generator according to claim 1, **characterized in that** the attachments between the ties (3) of the intermediate structure and the flattened bodies (1 and 2) are formed with a support (4) fixed on a central structural case (6) of the corresponding flattened body (1 or 2), and a screw (7) coupled to the respective tie (3), said screw (7) having a ring-shaped head (8), by means of which a hinged attachment is formed with the corresponding support (4) by means of a pin (9).

4. The blade for a horizontal-axis wind generator according to claim 1, **characterized in that** the flattened bodies (1 and 2) are attached at the end of the blade by means of a transverse strut (10) with an aerodynamic section.
